# EUROPEAN PATENT SPECIFICATION

(11) **EP 1 607 838 B1**
(45) Date of publication and mention of the grant of the patent: **08.05.2013**
(21) Application number: 05250325.7
(22) Date of filing: 24.01.2005
(51) Int. Cl.: G06F 1/32

(54) **Power state coordination between devices sharing power-managed resources**
Leistungsstatuskoordinierung zwischen Vorrichtungen die sich leistungsgeregelte Ressourcen teilen
Coordination de l'état de puissance entre des dispositifs qui partagent des ressources managés en puissance

(30) Priority: 17.06.2004 US 871638
(43) Date of publication of application: 21.12.2005
(73) Proprietor: Intel Corporation, Santa Clara, CA 95052 (US)
(72) Inventor: Wilcox, Jeffrey R., Folsom California 95630 (US); Kaushik, Shivnandan, Portland Oregon 97229 (US); Gunther, Stephen H., Beaverton Oregon 97007 (US); Bodas, Devadatta V., Federal Way, Washignton 98023 (US); Ramakrishnan, Siva, Beaverton Oregon 97006 (US); Poisner, David, Folsom California 95630 (US); Hacking, Lance E., Austin Texas 78749 (US)
(74) Representative: Harrison Goddard Foote

(56) References cited:
- WO-A-02/19078
- JP-A- 8 022 434
- US-A- 5 560 022
- US-A- 5 752 050
- US-A1- 2002 087 897

## Description

### TECHNICAL FIELD

Embodiments of the invention relate generally to computing systems. More particularly, embodiments of the invention relate to message exchanges for controlling computing system operational (e.g., power) modes.

### BACKGROUND

Power management in modem computer systems plays an important role in conserving energy, managing heat dissipation, and improving system performance. For example, modem computer systems are often designed for use in settings where a reliable external power supply is not available, making power management important for energy conservation. Even when reliable external power supplies are available, power management within the computing system can reduce heat produced by the system enabling improved performance of the system. Computing systems generally have better performance at lower ambient temperatures because key components can run at higher speeds without damaging their circuitry.

One approach to power management involves the implementation of various power states in system devices, where placing a device into a relatively low power state reduces energy consumption. The tradeoff to operating a device in a low power state is typically a reduction in the level of performance of the device. It should be noted, however, that the operation of some devices might in fact be dependent upon on the operation of other devices. For example, a processor might have a cache that is snooped by other processors, where placing the processor in a lower power state could negatively affect snoop latencies experienced by the other processors. Simply put, a power state transition in one device may prevent other devices from functioning at a desired level of performance.
Document WO 02/19078 discloses a system and method for monitoring and controlling a power manageable resource such as a bus in a computer system, which may be shareable among a number of power manageable devices.
Document US 2002/087897 discloses a device controller that can have multiple device performance states, which represent different levels of performance versus power consumption during operation.

### SUMMARY

There is provided a method as set out in claim 1, an apparatus set out in claim 9, a computer program a set out in claim 19 and computer program on a computer readable medium a set out in claim 20.

### BRIEF DESCRIPTION OF THE DRAWINGS

Embodiments of the invention are illustrated by way of example, and not by way of limitation, in the figures of the accompanying drawings in which like reference numerals refer to similar elements.
**Figure 1** is a block diagram of an example of a system having coordination agent;
**Figure 2A** is a diagram of an example of a computer system;
**Figure 2B** is a diagram of a second example of a computer system;
**Figure 3** is a flowchart of an example of a method of managing power state transitions;
**Figure 4** is a flowchart of an example of a process of using coordination agent to determine whether a power state transition in a primary device is permitted by a set of secondary devices;
**Figure 5** is a flowchart of an example of a process of managing power based on secondary device permissions; and
**Figure 6** is a flowchart of an example of a retry protocol.
**Figure 7** is a diagram of an example of a power state change request and response exchange.

### DETAILED DESCRIPTION

In the following description, numerous specific details are set forth. However, embodiments of the invention may be practiced without these specific details. In other instances, well-known circuits, structures and techniques have not been shown in detail in order not to obscure the understanding of this description.

### Hardware System Overview

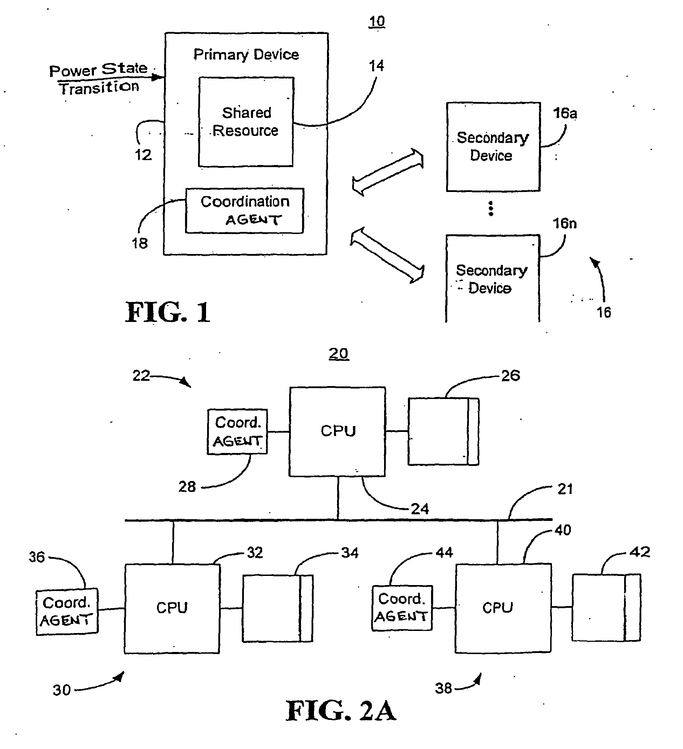

**Figure 1** shows a system 10 in which a primary device 12 shares a resource 14 with a set of secondary devices 16 (16a-16n). The resource 14 can be a memory structure, controller, interface, etc., and the term "device" is used to refer to any physical agent or node of a system. Examples of devices include, but are not limited to, processors, graphics controllers and cache controllers. It should also be noted that the primary device 12 could have multiple shared resources. Furthermore, the terms "primary" and "secondary" are only used for ease of discussion and can apply to any of the devices shown depending on the perspective from which the discussion is made.

Because the primary device 12 and the secondary devices 16 share the resource 14, power state changes within the primary device 12 have the potential to negatively (or positively) affect the performance of the secondary devices 16. Accordingly, in one embodiment, the primary device 12 uses coordination agent 18 to determine whether pending power the secondary devices 16 permit state transitions in the primary device 12. In an alternate embodiment, coordination agent 18 can be implemented in software, or a combination of hardware and software.

In one embodiment, the coordination agent can include, for example, an embedded logic circuit of an application specific integrated circuit (ASIC) or any other commercially available hardware component. By using coordination agent 18 to resolve the dependency issues associated with power state transitions, or other operating state transitions, the system 10 is able to achieve greater efficiency and enhanced performance. For example, the coordination agent 18 functions based on the dependencies associated with power state transitions in the primary device 12, and does not require knowledge of other system dependencies. As a result, systems having a relatively large number of interdependent devices and/or components can benefit from reduced complexity.

Although the coordination agent 18 is shown as being incorporated into the primary device 12, the coordination agent 18 could also be implemented in a separate device and/or package. Furthermore, the number of devices can vary depending upon the circumstances. As already noted, the terms "primary" and "secondary" are only used to facilitate the discussion. For example, the device 16a could also be viewed as a primary device with respect to coordination agent within the device 16a. Likewise, the device 12 could be viewed as a secondary device from the perspective of the device 16a (provided the device 12 depends upon power state transitions within the device 16a).

Turning now to **Figure 2A****,** a computer system 20 is shown to illustrate certain advantages associated with the principles described herein. In particular, a first processor node 22 has a first processor 24, a first cache 26 and first coordination agent 28. Similarly, a second processor node 30 includes a second processor 32, a second cache 34 and second coordination agent 36, and a third processor node 38 includes a third processor 40, a third cache 42 and third coordination agent 44.

Assume, for example, that the first cache 26 is coherent with the second cache 34 and the third cache 42, and therefore must be "snooped" by the second and third processors 32, 40 in order to ensure coherency. Assume further that the first processor node 22 receives a notification of a planned power state transition in the first processor 24. The power state transition might be from state "P2" to "P4", where state P4 provides lower power consumption and lower performance for the first processor 24 than state P2. Lower performance could be characterized by the suspension of certain features, where different power states suspend different features. Therefore, the above example of a transition from state P2 to P4 might result in a higher latency and/or decrease in bandwidth. It should be noted that alternatively, the transition could be to a state that provides higher power consumption and performance.

The coordination agent 28 identifies the second and third processor nodes 30, 38 as being dependent upon the power state transition. The identification can be made by consulting either an explicit or an implicit dependencies list that is dedicated to the first processor node 22. The dependencies list may be generated by a number of different mechanisms. For example, the list could be stored in a register by basic input/output system (BIOS) software or a system management controller at the time of startup. The dependencies list can also take on a number of different formats. For example, a single list could be used for every state type and level being coordinated. Alternatively, there could be a unique list for each state type and level. It should be noted that the dependencies list could be implicit in cases where all secondary devices in the system are deemed to be dependent on state transitions in the primary device. In such a case, a list would not need to be consulted. One example of this type of scenario could be a system having only two nodes.

Once the appropriate dependencies have been identified, the coordination agent 28 then queries the second and third processor nodes 30, 38 to determine whether the power state transition is permitted. Depending upon the status of each of the processors 32, 40 and their respective power management policies, the power state transition may or may not be permitted. For example, the second processor 32 may not be currently running a thread and could therefore have a policy that permits the transition. On the other hand, the third processor 40 could be running a high priority thread and anticipating the need to snoop the first cache 26. If, for example, the software controlling the third processor 40 requires a minimum power state level of P2 under these conditions, the transition to level P4 would be denied. In such a case, since all of the processors dependent upon the transition have not approved the power state transition, the first processor 24 would remain in power state P2.

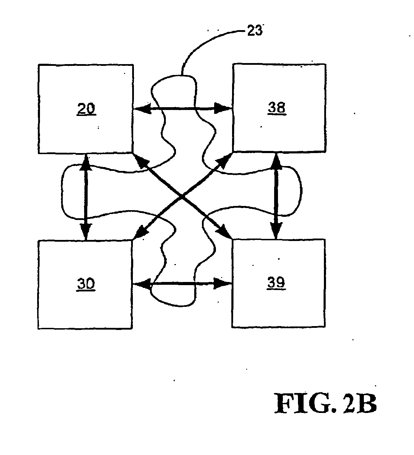

Although the processor nodes 20, 30 and 38 are shown as being interconnected by a single interface 21, other approaches to connecting the devices can be used. For example, multiple buses and intermediate bridges between the buses can be incorporated in to the interface 21. Indeed, the interface 21 can represent a portion of a point-to-point fabric, which interconnects all of the devices in the computer system 20. An example of such a topology is shown in **Figure 2B**.

In the illustrated embodiment, a point-to-point network interconnect 23 is coupled to processor nodes 20, 30, 38 and 39. In the point-to-point fabric topology, each node has a direct link to other nodes in the system. The network interconnect 23 can also have a layered communication protocol in which power management messages are transferred between nodes in packets at a protocol layer. Packets are data structures having a header and payload; where, the header includes "routing information" such as the source address and/or destination address of the packet; and/or, a connection identifier that identifies a connection that effectively exists in the network interconnect 23 to transport the packet. Other layers such as transport, routing, link and physical layers can reside beneath the protocol layer in the hierarchy.

### Power Management Techniques

In one embodiment, a coordination agent residing in an electronic system having one or more resources shared by multiple devices may include functionality to cause a processor or other primary device to transition to a lower power state. The coordination agent can be implemented as hardware, software or any combination of hardware and software. The coordination agent may not have visibility as to the requirements of secondary devices that depend on a shared resource when the primary device is to be transitioned to the lower power state. For example, a processor having a cache that is accessible by other processors may be targeted for transition to a lower power state, but one or more of the other processors may require access to the cache and may not be visible to the coordination agent.

When a secondary device depends on a resource that may experience a power (or performance) state change, the secondary device may provide feedback to the coordination agent (or primary device) regarding the dependency. This feedback may provide the coordination agent with information not available from the primary device, which may allow the coordination agent to provide better power management. Without the feedback, an autonomous action by the coordination agent with respect to the primary device could have a debilitating impact on secondary devices.

Described in greater detail below is a mechanism whereby the primary device and/or coordination agent coupled to a communications fabric can query secondary devices that depend on a shared resource in order to determine whether a change in power or operational state may adversely affect the secondary devices. This coordination mechanism provides increased power/performance functionality as compared to a system without the coordination mechanism.

In one embodiment, the power management mechanism may determine two power state values. The first power state value may be referred to as the "desired state," which may correspond to the state in which the coordination agent would place the primary device if no secondary devices depend on the shared resource. The second power state value may be referred to as the "allowed state," which may correspond to the state that is allowed by the secondary devices that depend on the shared resource. Thus, the resulting power state of the primary device may be different than the desired state because the primary device may not be allowed to transition to the desired power state based on responses from the secondary devices.

In one embodiment, when the coordination agent receives an indication of a power state transition, for example, from system software (or initiates a transition to a different power state) for the primary device, the coordination agent (or primary device) may collect feedback from one or more secondary devices that have dependencies upon the shared resource.

As an example, the primary device may be a processor that is to be transitioned to a sleep state where the processor cache may not be available to other system processors for snoops for many microseconds. In one embodiment, the coordination agent or the processor obtains "permission" through feedback from secondary devices (e.g., the other processors) to transition to the sleep state. That is, devices that may snoop the processor cache may provide feedback to the coordination agent or processor regarding the state transition.

In one embodiment, in order to solicit feedback from dependent resources, the coordination agent or primary device may send a message to each secondary device. Dependencies may be determined, for example, by checking a dependency list that is created by system management software or system BIOS (basic input/output system).

In one embodiment, the message sent to the secondary devices indicates that the target device may make a power state transition and, optionally, the desired state. Secondary devices that receive the message may respond by indicating a power state that would be allowable without detrimentally affecting performance of the secondary device. In some situations, though not all, the allowable state as indicated by the secondary devices may correspond to the power state of the secondary device.

In one embodiment, when the coordination agent (or primary device) receives responses from one or more secondary devices, a power state can be determined. The power state to be used for the primary device may be, for example, the highest power/performance level state from the set of the desired power state and the allowable power states as indicated by the secondary devices. This results in the selection of performance over power savings. In alternate embodiments, other states may be selected, for example, the lowest power state, which selects power savings over performance.

In one embodiment, secondary devices may take no power state transition in response to the request message. In one embodiment, a secondary system device may not receive or process response messages from other secondary devices. Further, the secondary device may not receive an indication of the power state to which the primary device has transitioned.

In one embodiment, a retry mechanism that supports re-querying can be provided. The retry mechanism may be invoked, for example, when system conditions change that may affect the result of a previous power state transition. In one embodiment, a retry bit may be included in a request message to indicate whether the message is an initial request message or a retry request message. The state of the retry bit may allow a device to determine whether a power state or other condition has changed. Multiple retry techniques are described in greater detail below.

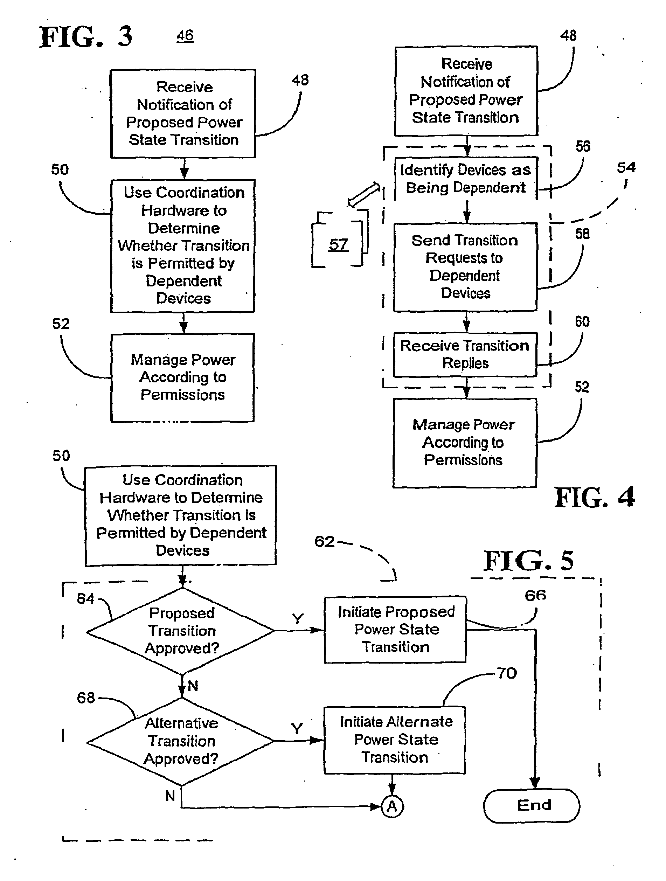

**Figure 3** shows a method 46 of managing power. The method 46 can be implemented as an embedded logic circuit of an ASIC or any other commercially available hardware technique, as already discussed. Processing block 48 provides for receiving notification of a pending power state transition in a primary device. Typically, the notification will be received from software, although the notification may also be received from a hardware component such as a hardware-based monitor performing targeted performance feedback. In one embodiment, coordination agent is used at block 50 to determine whether the power state transition is permitted by a set of secondary devices and block 52 provides for managing power for the primary device according to the permissions, as described above.

Turning now to **Figure 4**, one approach to using a coordination agent to determine whether a power state transition is permitted is shown in greater detail at block 54. Accordingly, block 54 can be readily substituted for block 50 (Fig. 3) discussed above. Specifically, each device in the set of secondary devices is identified as being dependent on the power state transition at block 56. As already noted, identifying the dependent devices can be accomplished by accessing either an explicit or an implicit dependencies list 57, where the dependencies list is dedicated to the primary device. Block 58 provides for sending a set of transition requests to the set of secondary devices and block 60 provides for receiving a set of transition replies from the set of secondary devices, where each transition reply indicates whether the power state transition is permitted.

**Figure 5** shows one approach to managing power for the primary device according to secondary device permissions in greater detail at block 62. Accordingly, block 62 can be readily substituted for block 52 (Fig. 3) discussed above. In particular, block 64 provides for determining whether all of the transition replies indicate that the proposed power state transition is approved. If so, the proposed power state transition is initiated in the primary device at block 66. Otherwise, it is determined at block 68 whether one or more of the transition replies indicate that an alternative power state transition is permitted. In particular, if the proposed power state transition is to a lower state, the alternative power state might be an intermediate state between the current state and the proposed state. For example, the proposed power state transition could be from P2 to P4, where one of the secondary devices will only permit a transition from P2 to P3. The alternative power state transition can be determined by hardware and/or software performance monitors of a limiting secondary device, where the limiting secondary device transmits the alternative power state transition to the primary device in a transition reply. If an alternative power state is identified, block 70 provides for initiating the alternative power state in the primary device.

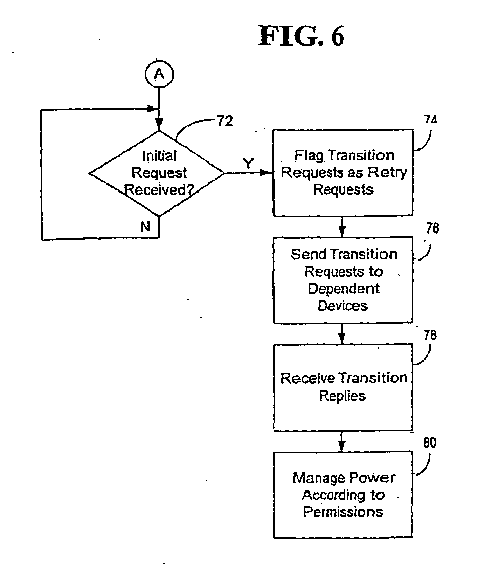

**Figure 6** is a flowchart of an example of a retry protocol. If so, each of the transition requests is flagged as a retry request at block 74 and the transition requests are re-sent to the secondary devices at block 76. Block 78 provides for receiving a set of transition replies and block 80 provides for managing the power of the primary device based on the replies. Alternatively, the primary device could simply poll the secondary devices periodically (i.e., repeat the re-sending on a periodic basis) in order to determine whether the initial request is permitted due to a change in the blocking condition. Such an approach would provide greater simplicity at the possible expense of lower performance and higher energy consumption.

One specific example of a retry protocol can be used after a primary device has attempted a transition to a lower power state and the result was a transition to a state having a non-optimum power level from the perspective of the primary device (i.e., no change or a change to some intermediate state). Since the primary device is not at the initially requested state, the primary device can make another attempt to transition to the initially requested state once the "blocking" conditions are no longer present. In such a case, if the primary device receives an initial transition request from one of the secondary devices, the request serves as an indication that the blocking condition may no longer be present because an initial transition request implies some sort of change in the power conditions of the transmitting device. The retry bit therefore informs the receiving secondary device as to whether or not a retry is necessary when a new request is detected.

Otherwise, devices could engage in a perpetual exchange of retry requests (i.e., a "deadlocking" condition) because none of the devices are able to distinguish between an incorning request representing an actual power condition change and one merely representing a retry. In order to determine whether the initially requested state is allowable, the primary device re-sends the transition requests as retry requests.

Another example of a retry protocol can be implemented when a transition to a higher power state is requested by a secondary device (i.e., an "increasing" secondary device). In such a case, an increase in the power state of the primary device may also require an increase in the power levels of the remaining secondary devices to meet the performance requirements of the device initiating the increase. Accordingly, a primary device may re-send transition requests when a secondary device requests an increase in power state. Simply put, when a device detects an initial request to a power state that is higher than its own power state, the device can issue retry requests to determine its new coordinated power state level.

Yet another example of a retry protocol can be used when a primary device has sent a transition request (either an initial or a retry request) and it receives an initial request from a secondary device before it has received replies from all of the secondary devices. Such a case would indicate that there is a possibility that some of the replies are stale and that retry requests should be issued.

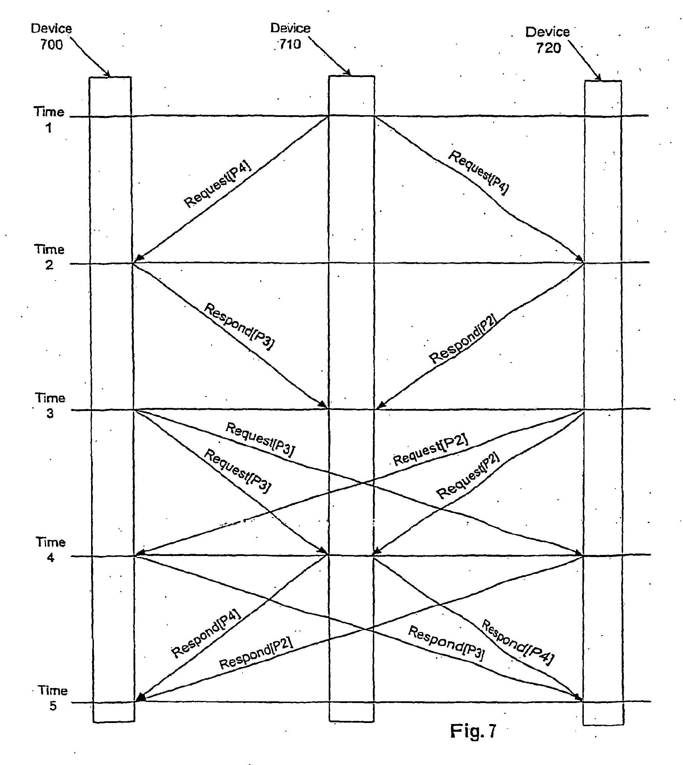

**Figure 7** is a diagram of an example of a power state change request and response exchange. The example of Figure 7 includes three devices (700, 710 and 720) that pass messages to coordinate power state changes. The example of Figure 7 is limited to three devices for reasons of simplicity of description. Any number of devices can be supported with messaging protocol described herein. The example of Figure 7 further includes time indications (Time 1, Time 2, Time 3, Time 4 and Time 5). These time indications are illustrated to provide a general concept of the temporal relationships of various messages and are not intended to represent strict timing requirements.

At Time 1, device 710 receives an indication of change in desired power state from P1 (the current power state) to P4 (a lower power state). The indication maybe received from, for example, a power control agent or operating system software. In response to the indication, a coordination agent (or device 710) sends messages (labeled "Request[P4]) to nodes 700 and 720 indicating the intended power state change. The message may include, for example, a retry bit, an indication of the current power state and/or the desired power state.

At Time 2, devices 700 and 720 receive the initial request from device 710. In one embodiment, in response to the initial request, the receiving (secondary) devices generate responses indicating allowable power states for device 710 from the perspective of the receiving devices. In the example of Figure 7, device 700 responds with an allowable power state of P3 and device 720 responds with an allowable power state of P2.

At Time 3, device 710 (or coordination agent) receives the responses from devices 700 and 720 and determines a power state for device 710. In one embodiment, device 710 may transition to a highest allowable power state. In such an embodiment, device 710 would transition to a power state of P2 as indicated by device 720. In an alternate embodiment, device 710 may transition to a lowest allowable power state. In such an embodiment, device 710 would transition to a power state of P3 as indicated by device 700. In another alternate embodiment, a different power state, for example, an intermediate power state can be used by device 710.

In one embodiment, at Time 3, devices 700 and 720 can issue retry messages (Request[P3] from device 700 and Request [P2] from device 720) because devices 700 and 720 were not in the desired states when the initial request was received from device 710.

At Time 4, devices 700 and 710 receive a retry request message from device 720 requesting a transition to power state P2. Similarly, devices 710 and 720 receive a retry request message from device 700 requesting a transition to power state P3. In response to the retry request messages, device 710 issues a response message indicating the power state P4 is allowable because device 710 is in the P4 power state. Similarly, in response to the retry request messages, device 700 issues a response message indicating the power state P3 is allowable because device 700 is in the P3 power state and device 720 issues a response message indicating the power state P2 is allowable because device 720 is in the P2 power state.

At Time 5, device 700 receives the response messages from devices 710 and 720 indicating that power states P4 and P2, respectively, are allowable. In one embodiment, in response to receiving the response messages, device 700 transitions to a power state of P2. Also, at Time 5, device 720 receives the response messages from devices 700 and 700 indicating that power states P3 and P4, respectively, are allowable. In one embodiment, in response to receiving the response messages, device 720 transitions to a power state of P3.

The example of Figure 7 results in each of devices 700, 710 and 720 transitioning to a different power state than at Time 1. The coordinated transition of power states as described with respect to Figure 7 can provide in an increased overall system efficiency by balancing the power and performance requirements of multiple system devices.

### Conclusion

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

While the invention has been described in terms of several embodiments, those skilled in the art will recognize that the invention is not limited to the embodiments described, but can be practiced with modification and alteration within the scope of the appended claims. The description is thus to be regarded as illustrative instead of limiting.

## Claims

1. A method comprising:
transmitting a message indicating a potential change of operational state for a primary device (12) in an electronic system to one or more respective secondary devices (16a, 16n) within the electronic system, wherein the secondary devices (16a, 16n) are capable of determining allowable operational states in response to the message indicating the potential change of operational state;
receiving one or more responses to the message from one or more respective secondary devices (16a, 16n) coupled with the primary device (12) indicating allowable operational states of the primary device (12) indicated by the one or more secondary devices (16a, 16n), wherein each message from the one or more respective secondary devices (16a,16n) indicates an allowable operational state for the corresponding secondary device (16a,16n);
comparing a target operational state for the primary device (12) to one or more allowable operational states for the primary device (12) as indicated by the responses received from the one or more respective secondary devices (16a,16n);
causing the primary device (12) to transition to one of the target operational state and the one or more allowable operational states as indicated by the responses received from the one or more respective secondary devices by utilising coordination hardware to determine whether pending operational state transitions for the primary device (12) are permitted by the secondary devices;
transmitting a subsequent message indicating the potential change of operational state for one of the secondary devices (16a,16n);
indicating the subsequent message as a retry message; and
transitioning the primary device (12) to a selected operational state determined based on responses received from the secondary devices (16a,16n).

2. The method of claim 1, further comprising initiating an alternative operational state transition in the primary device (12) if one or more of the responses indicate that the alternative operational state transition is permitted, the alternative operational state transition being based on a performance requirement of at least one of the secondary devices (16a, 16n).

3. The method of claim 1, wherein causing the primary device (12) to transition to one of the target operational state and the one or more allowable operational states comprises causing the primary device (12) to transition to a highest power state from the target operational state and the one or more allowable operational states.

4. The method of claim 1, wherein causing the primary device to transition to one of the target operational state and the one or more allowable operational states comprises causing the primary device (12) to transition to a lowest power state from the target operational state and the one or more allowable operational states.

5. The method of claim 1, wherein the operational state comprises a power state.

6. The method of claim 1, wherein the operational state comprises a performance state.

7. The method of claim 1, further comprising:
transmitting a subsequent message indicating the potential change of operational state for the primary device (12);
indicating the subsequent message as a retry message;
receiving one or more subsequent responses to the subsequent message from one or more respective secondary devices (16a,16n) coupled with the primary device (12) indicating allowable operational states of the primary device (12) indicated by the one or more secondary devices (16a,16n); and
transitioning the primary device (12) to a subsequent operational state determined based on the subsequent responses received from the secondary devices (16a,16n).

8. The method of claim 1 further comprising:
transmitting a subsequent message indicating the potential change of operational state for a selected one of the secondary devices (16a,16n);
indicating the subsequent message as a retry message; and
transitioning the selected secondary device (16a) to an operational state determined based on responses received from the other secondary devices (16a,16n).

9. An apparatus comprising:
a primary device (12) having a resource to be shared with one or more secondary devices (16a,16n) coupled with the primary device (12); and
a coordination agent (18) coupled with the primary device (12) and the one or more secondary devices (16a,16n) and arranged to:
transmit a message indicating a potential change of operational state for the primary device (12) to the one or more secondary devices (16a,16n), wherein the secondary devices (16a,16n) are capable of determining allowable operational states in response to the message indicating the potential change of operational state;
compare a target operational state for the primary device (12) to one or more allowable operational states for the primary device (12) as indicated by responses received from the one or more secondary devices (16a,16n), wherein each response from the one or more secondary devices (16a,16n) indicates an allowable operational state for the corresponding secondary device (16a,16n);
cause the primary device (12) to transition to one of the target operational state and the one or more allowable operational states as indicated by responses received from the one or more secondary devices (16a,16n) by utilizing coordination hardware to determine whether pending state transitions for the primary device (12) are permitted by the one or more secondary devices (16a,16n);
transmit a subsequent message indicating the potential change of operational state for one of the secondary devices (16a,16n);
indicate the subsequent message as a retry message; and
transition the primary device (12) to a selected operational state determined based on responses received from the secondary devices (16a,16n).

10. The apparatus of claim 9, wherein the coordination agent (18) receives notification of an operational state transition, identifies one or more secondary devices (16a,16n) as being dependent on an operational state transition, sends the message to the one or more secondary devices (16a,16n), and receives the responses from the one or more secondary devices (16a,16n).

11. The apparatus of claim 9, wherein the primary device (12) comprises a processor, the resource comprises a cache memory, and at least one of the one or more secondary devices (16a,16n) comprises a processor.

12. The apparatus of claim 9, wherein the coordination agent (18) is coupled to access at least one of an explicit and an implicit dependencies list to identify one or more secondary devices (16a,16n) as being dependent on an operational state transition, the dependencies list to be dedicated to the primary device (12).

13. The apparatus of claim 9, wherein the operational state comprises a power state.

14. The apparatus of claim 9, wherein the operational state comprises a performance state.

15. The apparatus of claim 9, wherein the coordination agent (18) comprises circuitry in an electronic system.

16. The apparatus of claim 9, wherein the coordination agent (18) comprises circuitry configured to communicate with multiple devices (12, 16a, 16n) configured as a network of wireless devices.

17. The apparatus of claim 9, wherein the coordination agent (18) causes the primary device (12) to transition to a highest power state from a target operational state as indicated by the message and one or more allowable operational states as indicated by the responses.

18. The apparatus of claim 9, wherein the coordination agent (18) causes the primary device (12) to transition to a lowest operational state from a target power state as indicated by the message and one or more allowable operational states as indicated by the responses.

19. A computer program comprising computer program code means adapted to perform all the steps of any of method claims 1-8 when the program is run on a computer.

20. A computer program as claimed in claim 19 when embodied on a computer readable medium.

## Patentansprüche

1. Verfahren, das folgendes umfasst:
das Übermitteln einer Nachricht, die eine potenzielle Veränderung eines Betriebszustands für eine primäre Vorrichtung (12) in einem elektronischen System einer oder mehreren entsprechenden sekundären Vorrichtungen (16a, 16n) in dem elektronischen System anzeigt, wobei die sekundären Vorrichtungen (16a, 16n) als Reaktion auf die Nachricht, welche die potenzielle Veränderung eines Betriebszustands anzeigt, zulässige Betriebszustände bestimmen können;
das Empfangen einer oder mehrerer Antworten auf die Nachricht von einer oder mehreren entsprechenden sekundären Vorrichtungen (16a, 16n), die mit der primären Vorrichtung (12) gekoppelt sind, wobei die Antworten zulässige Betriebszustände der primären Vorrichtung (12) anzeigen, angezeigt durch die eine oder die mehreren sekundären Vorrichtungen (16a, 16n), wobei jede Nachricht von der einen oder den mehreren sekundären Vorrichtungen (16a, 16n) einen zulässigen Betriebszustand für die entsprechende sekundäre Vorrichtung (16a, 16n) anzeigt;
das Vergleichen eines Ziel-Betriebszustands für die primäre Vorrichtung (12) mit einem oder mehreren zulässigen Betriebszuständen für die primäre Vorrichtung (12) gemäß der Anzeige durch die von der einen oder die mehreren entsprechenden sekundären Vorrichtungen (16a, 16n) empfangenen Antworten;
das Bewirken eines Wechsels der primären Vorrichtung (12) in den Ziel-Betriebszustand oder den einen oder die mehreren zulässigen Betriebszustände gemäß der Anzeige durch die von der einen oder den mehreren entsprechenden sekundären Vorrichtungen empfangenen Antworten, indem eine Koordinations-Hardware eingesetzt wird, um zu bestimmen, ob anstehende Betriebszustandswechsel für die primäre Vorrichtung (12) von den sekundären Vorrichtungen erlaubt werden;
das Übermitteln einer folgenden Nachricht, welche die potenzielle Veränderung des Betriebszustands für eine der sekundären Vorrichtungen (16a, 16n) anzeigt;
das Anzeigen der folgenden Nachricht als eine Wiederholungsnachricht; und
das Übergehen der primären Vorrichtung (12) in einen ausgewählten Betriebszustand, bestimmt gemäß den von den sekundären Vorrichtungen (16a, 16n) empfangenen Antworten.

2. Verfahren nach Anspruch 1, wobei dieses ferner das Einleiten eines alternativen Betriebszustandswechsels in der primären Vorrichtung (12) umfasst, wenn eine oder mehrere der Antworten anzeigen, dass der alternative Betriebszustandswechsel zulässig ist, wobei der alternative Betriebszustandswechsel auf einer Performance-Anforderung mindestens einer der sekundären Vorrichtungen (16a, 16n) basiert.

3. Verfahren nach Anspruch 1, wobei das Bewirken eines Wechsels der primären Vorrichtung (12) in den Ziel-Betriebszustand oder in einen der einen oder mehreren zulässigen Betriebszustände das Bewirken umfasst, dass die primäre Vorrichtung (12) aus dem Ziel-Betriebszustand und dem einen oder den mehreren zulässigen Betriebszuständen in einen höchsten Leistungszustand wechselt.

4. Verfahren nach Anspruch 1, wobei das Bewirken eines Wechsels der primären Vorrichtung in den Ziel-Betriebszustand oder in einen der einen oder mehreren zulässigen Betriebszustände das Bewirken umfasst, dass die primäre Vorrichtung (12) aus dem Ziel-Betriebszustand und dem einen oder den mehreren zulässigen Betriebszuständen in einen niedrigsten Leistungszustand wechselt.

5. Verfahren nach Anspruch 1, wobei der Betriebszustand einen Leistungszustand umfasst.

6. Verfahren nach Anspruch 1, wobei der Betriebszustand einen Performance-Zustand umfasst.

7. Verfahren nach Anspruch 1, wobei dieses ferner folgendes umfasst:
das Übermitteln einer folgenden Nachricht, welche die potenzielle Veränderung des Betriebszustands für die primäre Vorrichtung (12) anzeigt;
das Anzeigen der folgenden Nachricht als eine Wiederholungsnachricht;
das Empfangen einer oder mehrerer Antworten auf die folgende Nachricht von einer oder mehreren sekundären Vorrichtungen (16a, 16n), die mit der primären Vorrichtung (12) gekoppelt sind, wobei die zulässigen Betriebszustände der primären Vorrichtung (12) gemäß der Anzeige durch die eine oder die mehreren sekundären Vorrichtungen (16a, 16n) angezeigt werden; und
das Wechseln der primären Vorrichtung (12) in einen folgenden Betriebszustand, der auf der Basis der von den sekundären Vorrichtungen (16a, 16n) empfangenen folgenden Antworten bestimmt wird.

8. Verfahren nach Anspruch 1, wobei dieses ferner folgendes umfasst:
das Übermitteln einer folgenden Nachricht, welche die potenzielle Veränderung des Betriebszustands für eine ausgewählte der sekundären Vorrichtungen (16a, 16n) anzeigt;
das Anzeigen der folgenden Nachricht als eine Wiederholungsnachricht; und
das Wechseln der ausgewählten sekundären Vorrichtung (16a) in einen auf der Basis der von den anderen sekundären Vorrichtungen (16a, 16n) empfangenen Antworten bestimmten Betriebszustand.

9. Vorrichtung, die folgendes umfasst:
eine primäre Vorrichtung (12) mit einer mit einer oder mehreren sekundären Vorrichtungen (16a, 16n), die mit der primären Vorrichtung (12) gekoppelt sind, zu teilenden Ressource; und
einen Koordinationsagenten (18), der mit der primären Vorrichtung (12) und der einen oder den mehreren sekundären Vorrichtungen (16a, 16n) gekoppelt ist und so angeordnet ist, dass folgendes ausgeführt wird:
das Übermitteln einer Nachricht, die eine potenzielle Veränderung eines Betriebszustands für eine primäre Vorrichtung (12) der einen oder den mehreren sekundären Vorrichtungen (16a, 16n) anzeigt, wobei die sekundären Vorrichtungen (16a, 16n) als Reaktion auf die Nachricht, welche die potenzielle Veränderung eines Betriebszustands anzeigt, zulässige Betriebszustände bestimmen können;
das Vergleichen eines Ziel-Betriebszustands für die primäre Vorrichtung (12) mit einem oder mehreren zulässigen Betriebszuständen für die primäre Vorrichtung (12) gemäß der Anzeige durch die von der einen oder die mehreren sekundären Vorrichtungen (16a, 16n) empfangenen Antworten, wobei jede Antwort von der einen oder den mehreren sekundären Vorrichtungen (16a, 16n) einen zulässigen Betriebszustand für die entsprechende sekundäre Vorrichtung (16a, 16n) anzeigt;
das Bewirken eines Wechsels der primären Vorrichtung (12) in den Ziel-Betriebszustand oder den einen oder die mehreren zulässigen Betriebszustände gemäß der Anzeige durch die von der einen oder den mehreren entsprechenden sekundären Vorrichtungen (16a, 16n) empfangenen Antworten, indem eine Koordinations-Hardware eingesetzt wird, um zu bestimmen, ob anstehende Betriebszustandswechsel für die primäre Vorrichtung (12) von den sekundären Vorrichtungen (16a, 16n) erlaubt werden;
das Übermitteln einer folgenden Nachricht, welche die potenzielle Veränderung des Betriebszustands für eine der sekundären Vorrichtungen (16a, 16n) anzeigt;
das Anzeigen der folgenden Nachricht als eine Wiederholungsnachricht; und
das Übergehen der primären Vorrichtung (12) in einen ausgewählten Betriebszustand, bestimmt gemäß den von den sekundären Vorrichtungen (16a, 16n) empfangenen Antworten.

10. Vorrichtung nach Anspruch 9, wobei der Koordinationsagent (18) eine Benachrichtigung über einen Betriebszustandswechsel empfängt, eine oder mehrere sekundäre Vorrichtungen (16a, 16n) als abhängig von einem Betriebszustandswechsel identifiziert, die Nachricht an die eine oder die mehreren sekundären Vorrichtungen (16a, 16n) sendet und die Antworten von der einen oder den mehreren sekundären Vorrichtungen (16a, 16n) empfängt.

11. Vorrichtung nach Anspruch 9, wobei die primäre Vorrichtung (12) einen Prozessor umfasst, wobei die Ressource einen Cache-Speicher umfasst, und wobei zumindest die eine oder die mehreren sekundären Vorrichtungen (16a, 16n) einen Prozessor umfassen.

12. Vorrichtung nach Anspruch 9, wobei der Koordinationsagent (18) so gekoppelt ist, dass er auf mindestens eine explizite oder eine implizite Abhängigkeitsliste zugreifen kann, um eine oder mehrere sekundäre Vorrichtungen (16a, 16n) als abhängig von einem Betriebszustandswechsel zu identifizieren, wobei die Abhängigkeitsliste der primären Vorrichtung (12) zuzuweisen ist.

13. Vorrichtung nach Anspruch 9, wobei der Betriebszustand einen Leistungszustand umfasst.

14. Vorrichtung nach Anspruch 9, wobei der Betriebszustand einen Performance-Zustand umfasst.

15. Vorrichtung nach Anspruch 9, wobei der Koordinationsagent (18) eine Schaltkreisanordnung in einem elektronischen System umfasst.

16. Vorrichtung nach Anspruch 9, wobei der Koordinationsagent (18) eine Schaltkreisanordnung umfasst, die so konfiguriert ist, dass sie mit mehreren Vorrichtungen (12, 16a, 16n) kommuniziert, die als ein Netzwerk von drahtlosen Vorrichtungen konfiguriert sind.

17. Vorrichtung nach Anspruch 9, wobei der Koordinationsagent (18) bewirkt, dass die primäre Vorrichtung (12) aus einem Ziel-Betriebszustand wie durch die Nachricht angezeigt und aus einem oder mehreren zulässigen Betriebszuständen wie durch die Antworten angezeigt in einen höchsten Leistungszustand wechselt.

18. Vorrichtung nach Anspruch 9, wobei der Koordinationsagent (18) bewirkt, dass die primäre Vorrichtung (12) aus einem Ziel-Betriebszustand wie durch die Nachricht angezeigt und aus einem oder mehreren zulässigen Betriebszuständen wie durch die Antworten angezeigt in einen niedrigsten Leistungszustand wechselt.

19. Computerprogramm, das eine Computerprogrammcodeeinrichtung umfasst, die alle Schritte eines Verfahrens nach einem der Ansprüche 1 bis 8 ausführen kann, wenn das Programm auf einem Computer ausgeführt wird.

20. Computerprogramm nach Anspruch 19, ausgeführt auf einem computerlesbaren Medium.

## Revendications

1. Procédé, comprenant les étapes consistant à :
transmettre un message indiquant un changement potentiel d'état opérationnel pour un dispositif primaire (12) dans un système électronique à un ou plusieurs dispositifs secondaires respectifs (16a, 16n) dans le système électronique, dans lequel les dispositifs secondaires (16a, 16n) sont capables de déterminer les états opérationnels admissibles en réponse au fait que le message indique le changement potentiel d'état opérationnel ;
recevoir une ou plusieurs réponses au message provenant d'un ou de plusieurs dispositifs secondaires respectifs (16a, 16n) couplés au dispositif primaire (12) indiquant les états opérationnels admissibles du dispositif primaire (12) indiqué par le ou les dispositifs secondaires (16a, 16n), dans lequel chaque message du ou des dispositifs secondaires respectifs (16a, 16n) indique un état opérationnel admissible pour le dispositif secondaire correspondant (16a, 16n) ;
comparer un état opérationnel cible pour le dispositif primaire (12) à un ou plusieurs états opérationnels admissibles pour le dispositif primaire (12) comme indiqué par les réponses reçues du ou des dispositifs secondaires respectifs (16a, 16n) ;
amener le dispositif primaire (12) à passer à l'un de l'état opérationnel cible et du ou des états opérationnel admissibles comme indiqué par les réponses reçues du ou des dispositifs secondaires respectifs en utilisant un matériel de coordination pour déterminer si les changements d'état opérationnel en cours pour le dispositif primaire (12) sont permis par les dispositifs secondaires ;
transmettre un message ultérieur indiquant le changement potentiel d'état opérationnel pour l'un des dispositifs secondaires (16a, 16n) ;
indiquer le message ultérieur comme un message de nouvelle tentative ; et
faire passer le dispositif primaire (12) à un état opérationnel sélectionné déterminé sur la base des réponses reçues des dispositifs secondaires (16a, 16n).

2. Procédé selon la revendication 1, comprenant en outre l'étape consistant à initier une autre transition d'état opérationnel dans le dispositif primaire (12) si une ou plusieurs des réponses indiquent que l'autre changement d'état opérationnel est permis, l'autre transition d'état opérationnel étant basée sur une exigence de performance d'au moins l'un des dispositifs secondaires (16a, 16n).

3. Procédé selon la revendication 1, dans lequel amener le dispositif primaire (12) à passer à l'un de l'état opérationnel cible et du ou des états opérationnel admissibles comprend l'étape consistant à amener le dispositif primaire (12) à passer à un état de puissance maximale à partir de l'état opérationnel cible et du ou des états opérationnel admissibles.

4. Procédé selon la revendication 1, dans lequel amener le dispositif primaire à passer à l'un de l'état opérationnel cible et du ou des états opérationnel admissibles comprend l'étape consistant à amener le dispositif primaire (12) à passer à un état de puissance minimale à partir de l'état opérationnel cible et du ou des états opérationnel admissibles.

5. Procédé selon la revendication 1, dans lequel l'état opérationnel comprend un état de puissance.

6. Procédé selon la revendication 1, dans lequel l'état opérationnel comprend un état de performance.

7. Procédé selon la revendication 1, comprenant en outre les étapes consistant à :
transmettre un message ultérieur indiquant le changement potentiel d'état opérationnel pour le dispositif primaire (12) ;
indiquer le message ultérieur comme un message de nouvelle tentative ;
recevoir une ou plusieurs réponses ultérieures au message ultérieur à partir d'un ou de plusieurs dispositifs secondaires respectifs (16a, 16n) couplés au dispositif primaire (12) indiquant les états opérationnels admissibles du dispositif primaire (12) indiqués par le ou les dispositifs secondaires (16a, 16n) ; et
faire passer le dispositif primaire (12) à un état opérationnel ultérieur déterminé sur la base des réponses ultérieures reçues des dispositifs secondaires (16a, 16n).

8. Procédé selon la revendication 1, comprenant en outre les étapes consistant à :
transmettre un message ultérieur indiquant le changement potentiel d'état opérationnel pour l'un sélectionné des dispositifs secondaires (16a, 16n) ;
indiquer le message ultérieur comme un message de nouvelle tentative ; et
faire passer le dispositif secondaire sélectionné (16a) à un état opérationnel déterminé sur la base des réponses reçues des autres dispositifs secondaires (16a, 16n).

9. Appareil, comprenant :
un dispositif primaire (12) ayant une ressource à partager avec un ou plusieurs dispositifs secondaires (16a, 16n) couplés au dispositif primaire (12) ; et
un agent de coordination (18) couplé au dispositif primaire (12) et au ou aux dispositifs secondaires (16a, 16n) et agencé pour :
transmettre un message indiquant un changement potentiel d'état opérationnel pour le dispositif primaire (12) au ou aux dispositifs secondaires (16a, 16n), dans lequel les dispositifs secondaires (16a, 16n) sont capables de déterminer les états opérationnels admissibles en réponse au fait que le message indique le changement potentiel d'état opérationnel ;
comparer un état opérationnel cible pour le dispositif primaire (12) à un ou plusieurs états opérationnels admissibles pour le dispositif primaire (12) comme indiqué par les réponses reçues à partir du ou des dispositifs secondaires (16a, 16n), dans lequel chaque réponse du ou des dispositifs secondaires (16a, 16n) indique un état opérationnel admissible pour le dispositif secondaire correspondant (16a, 16n) ;
amener le dispositif primaire (12) à passer à l'un de l'état opérationnel cible et du ou des états opérationnel admissibles comme indiqué par les réponses reçues du ou des dispositifs secondaires (16a, 16n) en utilisant un matériel de coordination pour déterminer si les changements d'état opérationnel en cours pour le dispositif primaire (12) sont permis par le ou les dispositifs secondaires (16a, 16n) ;
transmettre un message ultérieur indiquant le changement potentiel d'état opérationnel pour l'un des dispositifs secondaires (16a, 16n) ;
indiquer le message ultérieur comme un message de nouvelle tentative ; et
faire passer le dispositif primaire (12) à un état opérationnel sélectionné déterminé sur la base des réponses reçues des dispositifs secondaires (16a, 16n).

10. Appareil selon la revendication 9, dans lequel l'agent de coordination (18) reçoit la notification d'une transition à un état opérationnel, identifie un ou plusieurs dispositifs secondaires (16a, 16n) comme dépendant d'une transition à un état opérationnel, envoie le message au ou aux dispositifs secondaires (16a, 16n), et reçoit les réponses du ou des dispositifs secondaires (16a, 16n).

11. Appareil selon la revendication 9, dans lequel le dispositif primaire (12) comprend un processeur, la ressource comprend une mémoire cache, et au moins l'un du ou des dispositifs secondaires (16a, 16n) comprend un processeur.

12. Appareil selon la revendication 9, dans lequel l'agent de coordination (18) est couplé pour accéder à au moins l'une d'une liste de dépendances explicites et implicites pour identifier un ou plusieurs dispositifs secondaires (16a, 16n) comme dépendant d'une transition à l'état opérationnel, la liste de dépendances étant dédiée au dispositif primaire (12).

13. Appareil selon la revendication 9, dans lequel l'état opérationnel comprend un état de puissance.

14. Appareil selon la revendication 9, dans lequel l'état opérationnel comprend un état de performance.

15. Appareil selon la revendication 9, dans lequel l'agent de coordination (18) comprend des circuits dans un système électronique.

16. Appareil selon la revendication 9, dans lequel l'agent de coordination (18) comprend des circuits configurés pour communiquer avec de multiples dispositifs (12, 16a, 16n) configurés comme un réseau de dispositifs sans fil.

17. Appareil selon la revendication 9, dans lequel l'agent de coordination (18) amène le dispositif primaire (12) à passer à état de puissance maximale à partir d'un état opérationnel cible, comme indiqué par le message et à un ou plusieurs états opérationnels admissibles comme indiqué par les réponses.

18. Appareil selon la revendication 9, dans lequel l'agent de coordination (18) amène le dispositif primaire (12) à passer à état de puissance minimale à partir d'un état opérationnel cible, comme indiqué par le message et à un ou plusieurs états opérationnels admissibles comme indiqué par les réponses.

19. Programme informatique comprenant des moyens de code de programme informatique adaptés pour réaliser toutes les étapes de l'une quelconque des revendications 1-8 lorsque le programme est exécuté sur un ordinateur.

20. Programme informatique selon la revendication 19 lorsqu'il est réalisé sur un support lisible par ordinateur.
